# EUROPEAN PATENT SPECIFICATION

(11) **EP 2 314 518 B1**
(45) Date of publication and mention of the grant of the patent: **15.04.2015**
(21) Application number: 10186717.4
(22) Date of filing: 06.10.2010
(51) Int. Cl.: B65D 25/14, B29C 63/22, B29C 53/42, B29C 63/34, B29C 63/00, B29L 31/00

(54) **METHOD FOR PROVIDING A CONTAINER FOR LIQUID PRODUCTS AND THE LIKE, WITH SIMPLIFIED DISPOSAL AND SUCH A CONTAINER**
VERFAHREN ZUR BEREITSTELLUNG EINES BEHÄLTERS FÜR FLÜSSIGE PRODUKTE UND DERGLEICHEN, MIT VEREINFACHTER ENTSORGUNG UND EIN SOLCHER BEHÄLTER
PROCÉDÉ DE FOURNITURE D'UN RÉCIPIENT POUR DES PRODUITS LIQUIDES ET SIMILAIRES, AVEC UNE MISE AU REBUT SIMPLIFIÉE ET UN TEL RÉCIPIENT

(30) Priority: 23.10.2009 IT MI20091844
(43) Date of publication of application: 27.04.2011
(73) Proprietor: Poli-Box Italiana S.R.L., 26845 Codogno (LO) (IT)
(72) Inventor: Rosso, Leonardo, 26845 Codogno LO (IT); Rosso, Fabrizio, 26845 Codogno LO (IT)
(74) Representative: Modiano, Micaela Nadia

(56) References cited:
- EP-A1- 0 580 972
- WO-A1-99/50153
- CA-A1- 2 367 776
- DE-U1- 9 315 888
- GB-A- 1 161 903

## Description

The present invention relates to a method for providing a container for liquid products and the like, with simplified disposal.

As is known, the containers that are used for liquid products, semiliquid products et cetera, such as, for example, paints and the like, must be subjected to separate disposal once the use of their contents has been finished, since they are considered special waste because, inevitably, traces of the liquid product that was originally contained remain inside them.

This implies that the entire container is considered special waste, i.e. a mass of product is considered special waste which is considerably greater than that portion which should actually be subjected to special disposal, which in practice is constituted only by the residue of the liquid contained.

In order to solve the above mentioned problem, solutions have already been devised which provide for implementing, on the inner surface of the container, a covering that can be removed when the use of the contained product is finished, so that a considerably smaller quantity of product than the entire container needs to be disposed of.

However, this solution suffers the drawback of facing considerable difficulties in removing the covering, because it is difficult to access a portion of the container that can constitute a grip element.

Another serious problem is constituted by the fact that applying the covering to the inner surface is particularly complex and implies the use of special machines, which inevitably cause a perceptible rise in costs. Examples of containers with disposable liners are disclosed in documents EP-A-0580972 A1 and WO 99/50153 A.

The aim of the present invention is to solve the above mentioned problems by devising a method for providing a container of liquid products and the like, with simplified disposal, that can simply and quickly apply the covering layer to the inner wall of the container, without needing to resort to laborious operations or to the use of special machinery.

Within this aim, an object of the invention is to provide a method that makes it possible to apply a covering that is easily removed, in that it is provided with grip elements that are immediately accessible and which make it possible to achieve the detachment of the covering from the container, once use of the product has finished.

Another aim of the present invention is to provide a method that, thanks to its distinctive implementation characteristics, is capable of offering the greatest guarantees of reliability and safety in use.

A further object of the present invention is to provide a method that can be easily implemented from elements and materials that are easily sourced on the market and which, moreover, is competitive also from a merely economical viewpoint.

This aim and these objects and others which will become better evident hereinafter, are achieved by a method for providing a container for liquid products and the like, with simplified disposal according to the invention, that consists in the steps of claim 1. and in the container according to claim 6.

Further characteristics and advantages of the invention will become better apparent from the description of a preferred, but not exclusive, embodiment of a method for providing a container for liquid products and the like, with simplified disposal, illustrated by way of non-limiting example in the accompanying drawings wherein:
Figure 1 shows an exploded perspective view of the covering layer and of the pad;
Figure 2 shows the step of application of the covering layer on the pad;

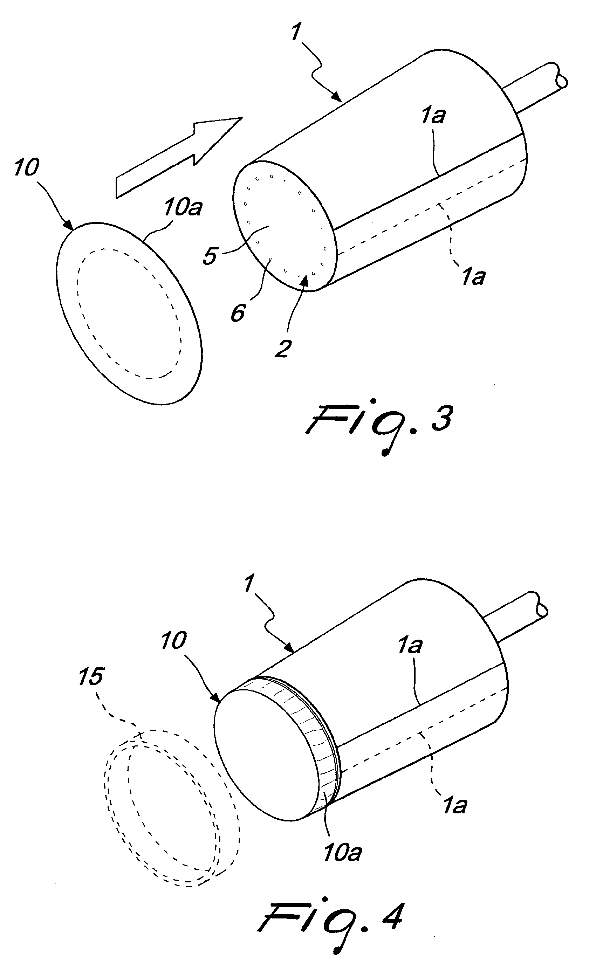

Figure 3 is an exploded view of the bottom to be applied to the base of the pad;
Figure 4 shows the bottom applied onto the covering layer arranged over the pad;

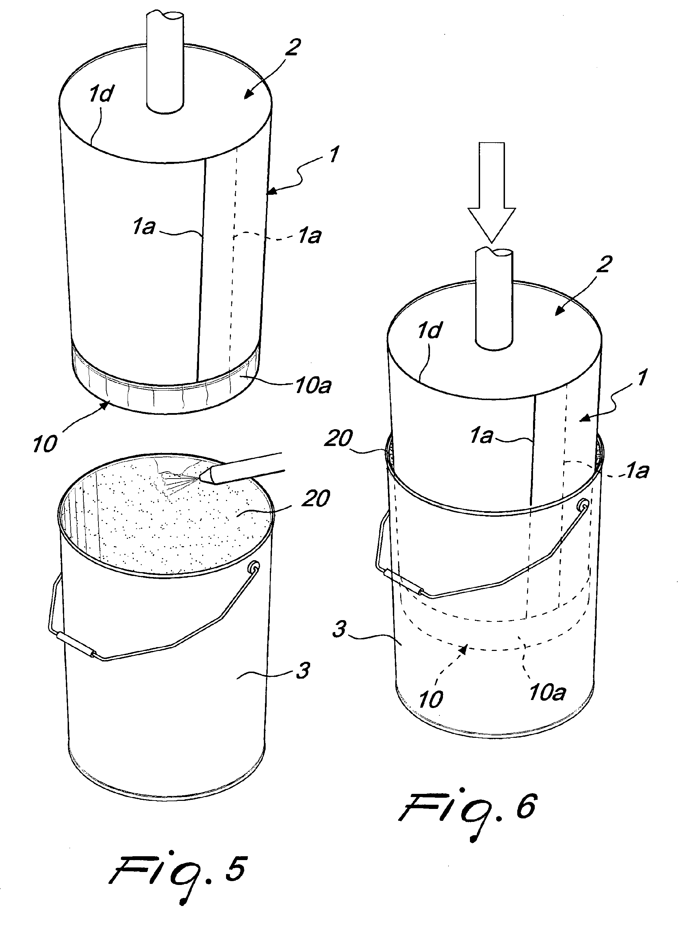

Figure 5 shows the step of application of an adhesive layer on the container;
Figure 6 shows the step of inserting the pad into the container;

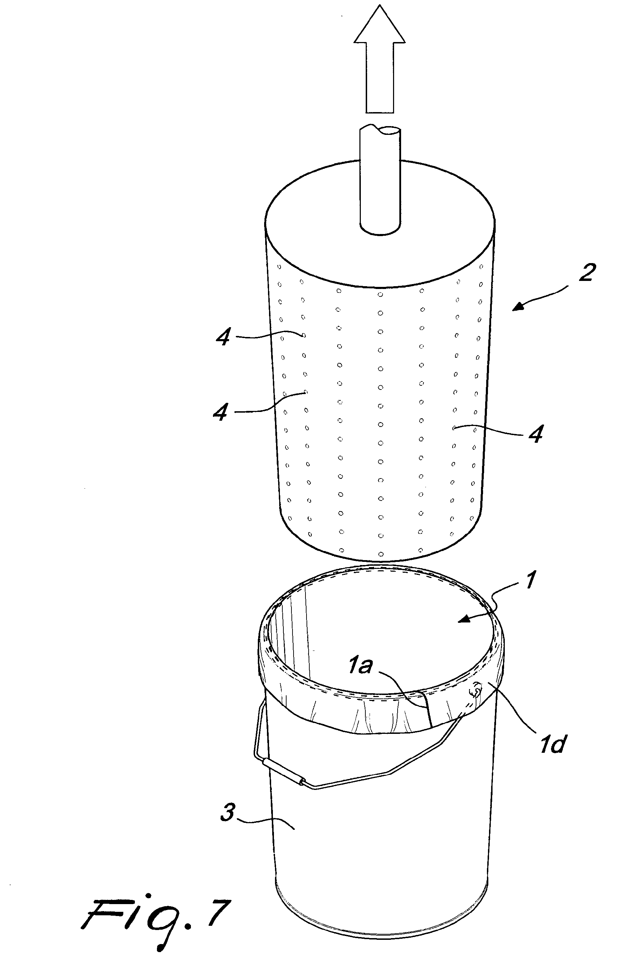

Figure 7 shows the extraction of the pad from the container;

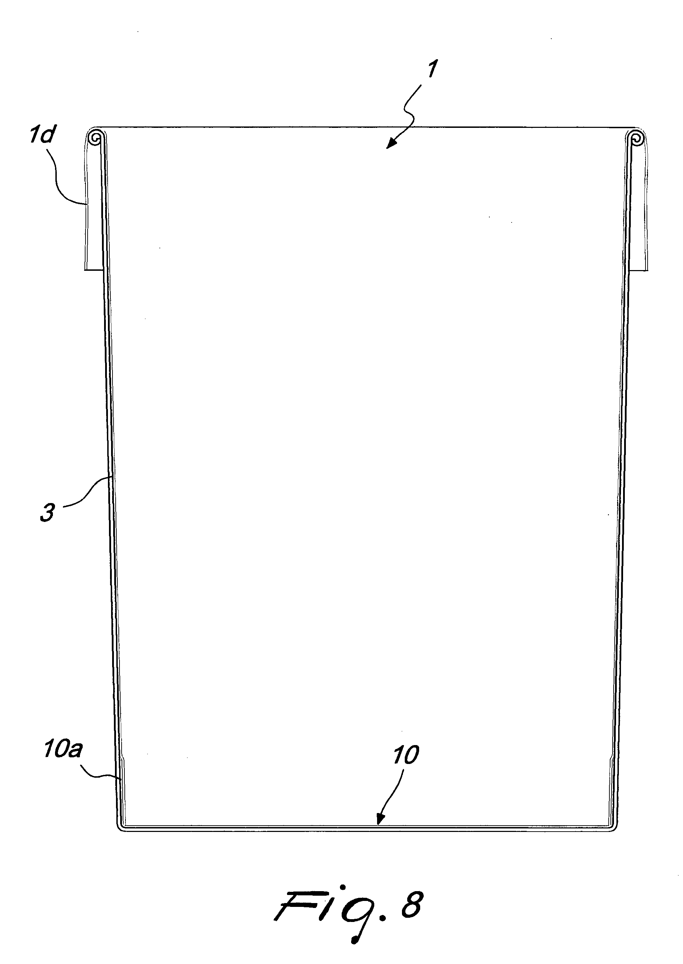

Figure 8 is a sectional view of the covered container.

With reference to the figures, the method for providing a container for liquid products and the like, with simplified disposal, consists, preliminarily, in providing a covering layer 1 made preferably of plastics, which advantageously has a substantially rectangular shape for cylindrical containers and is a portion of a circle for containers with a truncated cone shape.

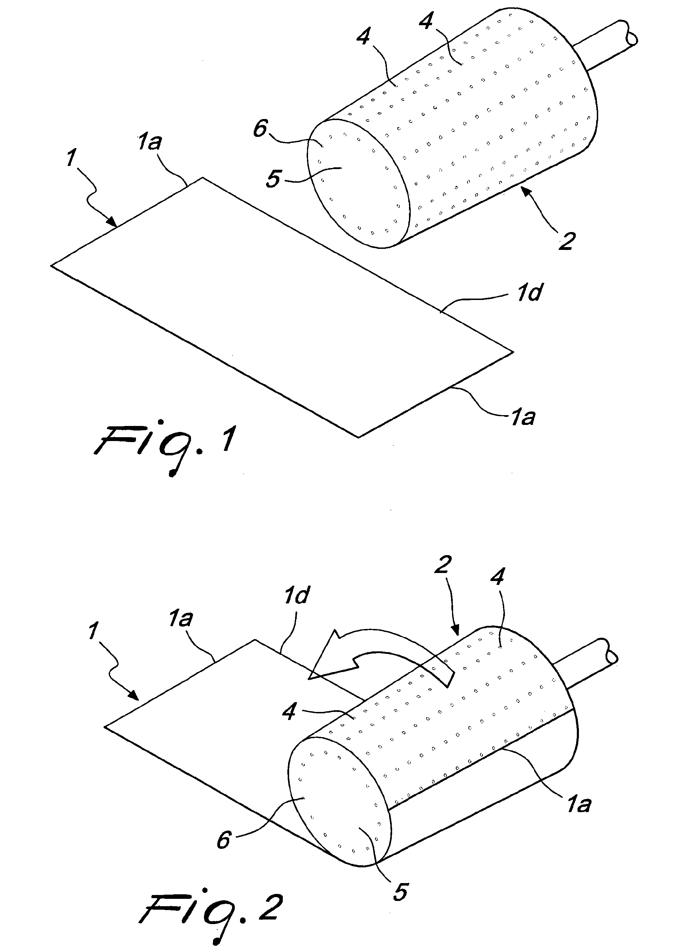

The covering layer is positioned on the lateral surface of a pad 2, which advantageously has a shape that is complementary with respect to the inside of the container 3 to which the covering must be applied and is provided on its surface with a plurality of holes 4 which, when extracting the covering layer 1, are connected to a source of suction so that the covering layer adheres to the surface of the pad which, advantageously, as illustrated in figure 2, is made to rotate, in order to envelop the covering layer upon it, edges 1a of the covering layer overlapping it for a certain portion and being, preferably, mutually joined.

Once the covering layer has been applied, a bottom 10 is applied onto the pad. The bottom 10 is also made of plastics, but not necessarily the same as that used for the covering layer.

The bottom 10 has a shape, preferably circular and with a radius that is larger than that of the base 5 of the pad 2, which is provided with base holes 6.

The bottom is connected to the base of the pad and, subsequently, its perimetric edge, indicated with 10a, is folded onto the covering layer which, preferably, is arranged so as to be flush with the base of the pad.

The fold can be implemented with a hooped element, generally indicated with 15, which is fitted over the pad, at the base end, so as to fold the perimetric edge 10a and subsequently jointly connect it to the covering layer, for example, by heat sealing or other means of connection.

Once the covering has been arranged on the pad, between the covering arranged on the pad and the container 3 a layer of adhesive material 20 is interposed which, advantageously, but not necessarily, is applied on the inner surface of the container body which can have an unfinished surface since the implemented covering will later come to cover the surface.

The covering layer advantageously can be made with a thin film so as to not limit or modify the stackable nature that is typical of this kind of containers.

To perform the application, the pad is inserted in the container 3, the pad advantageously having a shape that is complementary to the inner surface of the container, and then the pad is removed, thus releasing the implemented covering on the inner surface, being facilitated by the optional use of jets of air which are introduced through the holes 4 and 6 which render stable the detachment of the pad from the covering; this type of application ensures that no bubbles remain between the covering and the container, and so the covering remains perfectly adherent, allowing the stacking of the empty containers and the possibility of mixing the contained product.

To complete the method, the free edge of the covering layer, indicated with 1d, can be folded or flanged on the container so as to practically make available a particularly easy grip element which later makes it possible to perform the removal of the covering layer once the contents of the container have been completely used.

From the foregoing it can be seen that the invention achieves the intended aim and, in particular, attention is drawn to the fact that a method is made available which is based on the use of structurally simple elements and on contrivance of preliminarily applying the covering layer onto the pad and then introducing it, with the optional interposition of an adhesive layer, inside the container, thus solving all the problems associated with the connection of the covering to the inner surface of the container.

Another important aspect consists in that a continuous inner covering has been provided simply by carrying out easy heat-sealing operations on the flaps of the covering layer which mutually overlap and on the perimetric edge of the bottom which overlaps the covering layer, thus obtaining a covering that is, in practice, sealed with respect to the inner surface of the container.

The invention, thus conceived, is susceptible of numerous modifications and variations, all of which are within the scope of the appended claims.

Moreover, all the details may be substituted by other, technically equivalent elements.

In practice the materials employed, provided they are compatible with the specific use, as well as the dimensions and the contingent shapes, may be any according to requirements.

The disclosures in Italian Patent Application No. MI2009A001844 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for providing a container of liquid products and the like with simplified disposal, consisting of:
providing a pad (2) with a shape that is complementary with respect to the inside of a container (3) and with a plurality of holes (4, 6) provided on its surface that are connectable to a source for suction,
applying a covering layer (1) on the lateral surface of the pad (2),
applying a covering bottom (10) to the base (5) of said pad (2),and
applying suction through said plurality of holes (4, 6) so that said covering layer (1) and said bottom (10) are connected to said pad (2),
folding the perimetric edge (10a) of said covering bottom (10) onto said covering layer (1),
jointly connecting said perimetric edge (10a) to said covering layer (1),
inserting the covered pad (2) in the container (3) and applying said covering layer (1) with said bottom (10) to the inner surface of said container (3),
extracting said pad (2) and folding onto said container (3) the free edge (1d) of said covering layer (1) so as to make available a grip element that makes possible removal of the covering (1).

2. The method according to claim 1, **characterized in that** said bottom (10) is jointly connected to said covering layer (1) by heat-sealing.

3. The method according to claim 1, **characterized in that** said covering layer (1) has, on the lateral surface of said pad (2), superimposed edges (1a) which are mutually joined by heat-sealing.

4. The method according to one or more of the preceding claims, **characterized in that** it provides for the application of a layer of adhesive material (20) onto the inner surface of said container (3), prior to the insertion of said pad (2) with said covering (1).

5. The method according to one or more of the preceding claims, **characterized in that** it provides for the emission of air jets from said pad (2) in order to separate said pad (2) from said covering layer (1).

6. A container for liquid products and the like with simplified disposal, made by a method according to the preceding claims, that has, applied on its inner surface, a continuous inner covering formed by a covering layer (1) with flaps (1a) that mutually overlap and are joined to each other by heat-sealing , and a bottom (10) that has the perimetric edge (10a) overlapping said covering layer (1) and joined thereto by heat-sealing, said covering layer (1) having a free edge (1d) that is folded onto the container (3) that forms a grip element that makes possible removal of the covering.

## Patentansprüche

1. Ein Verfahren zur Bereitstellung eines Behälters für flüssige Produkte und dergleichen mit vereinfachter Entsorgung, das aus Folgendem besteht:
Bereitstellung eines Pfropfens (2) mit einer Form, die komplementär zur Innenseite eines Behälters (3) ist, und mit einer Vielzahl von Löchern (4, 6), die auf seiner Oberfläche angebracht sind, die mit einer Saugquelle verbunden werden können,
Anbringung einer Abdeckschicht (1) auf die Seitenfläche des Pfropfens (2),
Anbringung eines Abdeckbodens (10) auf die Basis (5) des Pfropfens (2), und
Anlegen von Sog durch die Vielzahl von Löchern (4, 6), so dass die Abdeckschicht (1) und der Boden (10) mit dem Pfropfen (2) verbunden werden,
Falten der Umfangskante (10a) des Abdeckbodens (10) auf die Abdeckschicht (1),
feste Verbindung der Umfangskante (10a) mit der Abdeckschicht (1),
Einsetzen des abgedeckten Pfropfens (2) in den Behälter (3) und Anbringen der Abdeckschicht (1) mit dem Boden (10) auf die Innenfläche des Behälters (3),
Herausziehen des Pfropfens (2) und Falten der freien Kante (1d) der Abdeckschicht (1) um den Behälter (3), um ein Greifelement zur Verfügung zu stellen, das das Entfernen der Abdeckschicht (1) ermöglicht.

2. Das Verfahren gemäß Anspruch 1, **dadurch gekennzeichnet, dass** der Boden (10) durch Wärmeversiegelung fest mit der Abdeckschicht (1) verbunden wird.

3. Das Verfahren gemäß Anspruch 1, **dadurch gekennzeichnet, dass** die Abdeckschicht (1) auf der Seitenfläche des Pfropfens (2) übereinanderliegende Kanten (1a) hat, die durch Wärmeversiegelung miteinander verbunden werden.

4. Das Verfahren gemäß einem oder mehreren der obigen Ansprüche, **dadurch gekennzeichnet, dass** es die Anbringung einer Schicht von klebendem Material (20) auf die Innenfläche des Behälters (3) vor dem Einsetzen des Pfropfens (2) mit der Abdeckschicht (1) vorsieht.

5. Das Verfahren gemäß einem oder mehreren der obigen Ansprüche, **dadurch gekennzeichnet, dass** es den Ausstoß von Luftstrahlen aus dem Pfropfens (2) vorsieht, um den Pfropfen (2) von der Abdeckschicht (1) zu trennen.

6. Ein Behälter für flüssige Produkte und dergleichen mit vereinfachter Entsorgung, hergestellt durch ein Verfahren gemäß den obigen Ansprüchen, der, aufgetragen auf seine Innenfläche, eine durchgehende Innenabdeckung hat, gebildet durch eine Abdeckschicht (1) mit Flügeln (1a), die einander überlappen und miteinander durch Wärmeversiegelung verbunden werden, und einen Boden (10), dessen Umfangskante (10a) die Abdeckschicht (1) überlappt und damit durch Wärmeversiegelung verbunden ist, wobei die Abdeckschicht (1) eine freie Kante (1d) hat, die auf den Behälter (3) gefaltet wird und ein Greifelement bildet, das das Entfernen der Abdeckschicht ermöglicht.

## Revendications

1. Procédé pour réaliser un récipient pour produits liquides, et analogues, avec une mise au rebut simplifiée, comprenant :
la fourniture d'un bloc (2) présentant une forme qui est complémentaire de l'intérieur d'un récipient (3) et présentant une pluralité de trous (4, 6) réalisés sur sa surface, les trous pouvant être reliés à une source d'aspiration,
l'application d'une couche de revêtement (1) sur la surface latérale du bloc (2),
l'application d'un fond de revêtement (10) sur la base (5) dudit bloc (2), et
l'application d'une aspiration par l'intermédiaire de la pluralité de trous (4, 6), de sorte que ladite couche de revêtement (1) et ledit fond de revêtement(10) soient liés audit tampon (2),
le pliage du bord périphérique (10a) du fond de revêtement (10) sur ladite couche de revêtement (1),
la co-liaison dudit bord périphérique (10a) et de la couche de revêtement (1),
l'insertion du bloc (2) dans le récipient (3) et l'application de la couche de revêtement (1) avec ledit fond de revêtement (10) sur la surface intérieure dudit récipient (3),
l'extraction du bloc (2) et le pliage sur le récipient (3) du bord libre (1d) de la couche de revêtement (1) pour rendre disponible un élément de saisie qui permet un retrait du revêtement (1).

2. Procédé selon la revendication 1, **caractérisé en ce que** ledit fond (10) est relié conjointement à ladite couche de revêtement (1) par thermoscellage.

3. Procédé selon la revendication 1, **caractérisé en ce que** ladite couche de revêtement (1) comporte, sur la surface latérale dudit bloc (2), des bords superposés (1a) qui sont mutuellement réunis par thermoscellage.

4. Procédé selon l'une ou plusieurs des revendications précédentes, **caractérisé en ce qu'**il comporte l'application d'une couche de matériau adhésif (20) sur la surface intérieure dudit récipient (3), avant l'insertion dudit bloc (2) avec ledit revêtement (1).

5. Procédé selon l'une ou plusieurs des revendications précédentes, **caractérisé en ce qu'**il comporte l'émission de jets d'air à partir dudit bloc (2) pour séparer ledit bloc (2) de ladite couche de revêtement (1).

6. Récipient pour produits liquides, et analogues, avec une mise au rebut simplifiée, réalisé à l'aide d'un procédé selon les revendications précédentes, qui comporte, appliqué sur sa surface intérieure, un revêtement intérieur continu formé par une couche de revêtement (1) avec des volets (1a) qui se chevauchent mutuellement et qui sont réunis les uns aux autres par thermoscellage, et un fond (10) dont le bord périphérique (10a) chevauche ladite couche de revêtement (1) et est réuni à celle-ci par thermoscellage, ladite couche de revêtement (1) comportant un bord libre (1d) qui est plié sur le récipient (3), qui forme un élément de saisie qui rend possible le retrait du revêtement.
